# EUROPÄISCHE PATENTANMELDUNG

(11) **EP 1 228 947 A2**
(43) Veröffentlichungstag der Anmeldung: **07.08.2002**
(21) Anmeldenummer: 02001829.7
(22) Anmeldetag: 26.01.2002
(51) Int. Cl.: B62D 25/10

(54) **Kraftfahrzeug mit einer Haube**

(30) Priorität: 01.02.2001 DE 10104334
(71) Anmelder: Wilhelm Karmann GmbH, D-49084 Osnabrück (DE)
(72) Erfinder: Grave, Markus, 49536 Lienen (DE); Im Sande, Holger, 49082 Osnabrück (DE); Klein, Dieter, 49324 Melle (DE)
(74) Vertreter: Busse & Busse Patentanwälte

(57) **Zusammenfassung**

Ein Kraftfahrzeug (1) mit einer Haube (2), insbesondere einer frontseitigen Haube, die zumindest eine äußere Decklage (3) sowie eine innenseitig über Verbindungsmittel (6) bereichweise mit der Decklage (3) verbundene Unterstützungslage (4) umfaßt, wird so ausgebildet, daß die Unterstützungslage (4) ein im wesentlichen flächiges Bauteil mit einer Mehrzahl von sich aus dessen Grundfläche (5) in Richtung der Decklage erstreckenden und als Verbindungsmitel (6) wirkenden Ausprägungen ausbildet (Fig. 2).

## Beschreibung

Es ist bekannt, bei Hauben einen mehrteiligen Aufbau vorzusehen, wobei eine äußere Lage eine optisch ansprechende und flächig durchgehende Decklage ausbildet, während eine untere Unterstützungslage derart aufgebaut ist, daß sie durch Ausbildung von Streben, die mit der äußeren Decklage verbunden sind, die Biegestreifigkeit der Haube sichert und zwischen den Streben Freiräume beläßt, in denen die äußere Decklage keine Unterstützung erfährt und somit nachgiebig auf beispielsweise den Aufprall eines Fußgängers bei einem Unfall reagieren kann. Im Bereich der Streben ist diese Nachgiebigkeit jedoch nicht gegeben, so daß ein dort anprallender Fußgänger oder Radfahrer einem hohen Verletzungsrisiko, insbesondere einem hohen Kopfverletzungsrisiko (HIC), ausgesetzt ist. Zudem können die Streben eine Biegesteifigkeit nur in Vorzugsrichtungen, die durch die Erstreckung der Streben definiert sind, gewährleisten. Wenn etwa ein Anprall eines anderen Fahrzeuges aus einem ungünstigen Winkel erfolgt, ist die Energieaufnahme einer solchen Haube beeinträchtigt, da die Verbindungsstreben dann Ihre Aussteifungsfunktion nicht erfüllen können.

Die DE 195 14 324 A1 zeigt ein Kraftfahrzeug mit einer frontseitigen Haube, die eine äußere Decklage und eine innere, über Verbindungsmittel mit dieser verbundene Unterstützungslage umfaßt. Von der Unterstützungslage erstrecken sich Verbindungselemente in Richtung der Decklage. Diese Verbindungsmittel bieten daher jeweils einen definierten Widerstand gegen eine Krafteinleitung in die Decklage aus einer parallel zur Erstreckung der Verbindungsmittel liegenden Krafteinleitungsrichtung.

Auch die DE 35 46 050 A1 und die DE 35 81 118 A1 zeigen ähnliche Ausbildungen.

A11 diesen Ausbildungen ist gemein, daß der Zusammenhalt von Decklage und Unterstützungslage bei Krafteinleitung aus einer anderen als der parallel zur Erstreckungsrichtung liegenden Richtung nicht gewährleistet ist und die gewünschte Deformationswirkung der Verbindungselemente nicht zum Tragen kommen kann.

Der Erfindung liegt das Problem zugrunde, hier eine Verbesserung zu schaffen.

Die Erfindung löst das Problem durch ein Kraftfahrzeug mit den Merkmalen des Anspruchs 1 sowie durch eine Haube mit den Merkmalen des Anspruchs 14. Vorteilhafte Ausgestaltungen sind in den Unteransprüchen 3 bis 13 angegeben.

Durch die erfindungsgemäße Ausbildung des Kraftfahrzeuges ist eine Vielzahl von punktuellen Verbindungen zwischen den Lagen der Haube, insbesondere der frontseitigen Haube, erreicht. Anstelle der durchgehenden, Vorzugsrichtungen definierenden Streben oder anderen Verbindungsmitteln ist somit eine Krafteinleitung aus jeder Richtung im wesentlichen der gleiche Widerstand entgegengesetzt. Dadurch, daß die Verbindungsmittel eine mehrzählige Symmetrie aufweisen, ist auch gegenüber Scherkräften aus unterschiedlichen Richtungen die Anbindung des Verbindungsmittels an die beiden Lagen, die durch dies verbunden werden, gewährleistet. Die Verbindungsmittel müssen hierfür nicht einstückig mit einer der Lagen ausgebildet sein, sondern können auch als separate, beispielsweise im Querschnitt trapezförmige Bauteile vorgesehen sein, die sowohl mit der Decklage als auch mit der Unterstützungslage verbunden, beispielsweise verklebt oder verschweißt sind.

Wenn die Verbindungselemente zwischen den Lagen der Haube als Ausprägungen ausgebildet sind, können diese in einem Arbeitsgang in eine der Lagen, insbesondere die Unterstützungslage, eingearbeitet werden. Diese kann dann als vollständiges, mit den Ausprägungen versehendes Bauteil dem Produktionsprozeß zugeführt werden.

Durch die verteilte, punktuelle Anbindung der Lagen aneinander ist in den zwischen den Verbindungen liegenden freien Bereichen eine große, zusammenhängende und nicht durch Streben unterteilte mögliche Aufprallfläche gegeben, die außerhalb der kleinen punktuellen Verbindungsflächen die volle Nachgiebigkeit der unverbundenen Decklage aufweist und dennoch die Stabilität des Verbundes zwischen Decklage und Unterstützungslage über ihre gesamte Fläche sicherstellt, wozu insbesondere eine nach Stabilitätserfordernissen optimierte Verteilung der Verbindungsmittel vorgesehen ist.

Die mehrzählige Symmetrie kann beispielsweise sechszählig ausgebildet sein, wobei dann die Verbindungsflächen als regelmäßige Sechsecke ausgebildet sind, von denen sich die Schrägflächen zur Verbindung mit der gegenüberliegenden Lage erstrecken. Besonders günstig ist dabei ein Übergangswinkel zwischen den Verbindungsflächen zu den Schrägwandungen sowie auch von den Schrägwandungen zu der gegenüberliegenden Lage, der in der Größenordnung zwischen 25 und 35 Grad liegt, um damit auch eine Scherkraft, die im wesentlichen parallel zur Erstreckung der Lagen eingetragen wird, ohne Abreißen des Verbindungsmittels entgegenwirken zu können. Bei einem zu flachen Winkel hingegen wäre der Abstand zwischen der Decklage und der Unterstützungslage zu gering, so daß der Deformationsweg etwa bei einem Anprall eines Unfallopfers zu stark begrenzt wäre.

Zur Gewichtsreduzierung kann die Unterstützungslage mit Ausnehmungen versehen sein, so daß Teilbereiche der Decklage frei ohne einen darunterliegenden Bereich der Unterstützungslage verbleiben.

Weitere Vorteile und Einzelheiten ergeben sich aus einem in der Zeichnung dargestellten und nachfolgend beschriebenen Ausführungsbeispiel des Gegenstandes der Erfindung.

### In der Zeichnung zeigt:

- Figur 1: ein erfindungsgemäßes Kraftfahrzeug in schematischer Gesamtansicht schräg von vorne,
- Figur 2: die Unterstützungslage der in Figur 1 eingezeichneter Motorhaube nach Entfernen der Decklage in schematischer Draufsicht,

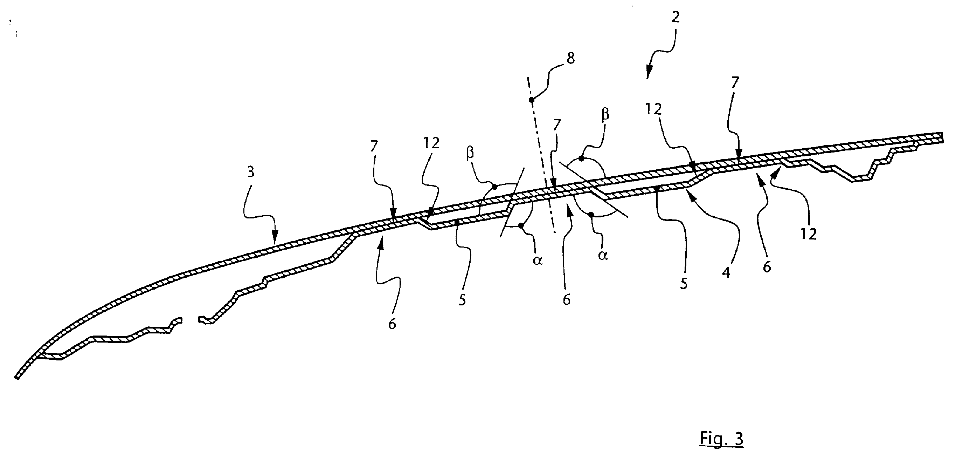

- Figur 3: einen Schnitt entlang der Linie III-III in Figur 1.

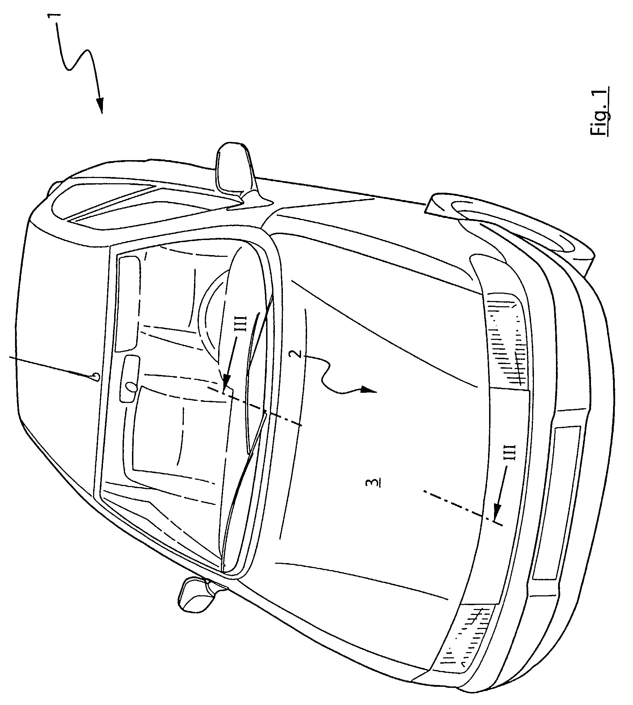

Das Kraftfahrzeug 1 gem. Figur 1 weist eine frontseitige Haube 2 auf, deren Decklage 3 an die optische und Formgestaltung der äußere Karosseriehaut angepaßt und daher im wesentlichen glattflächig ausgebildet ist. Die Erfindung betrifft sowohl eine Fronthaube, die in den meisten Fällen eine Motorraumabdeckung darstellt, bei Mittel- oder Heckmotorfahrzeugen auch einen Kofferraum oder anderen Hohlraum übergreifen kann, ist jedoch nicht auf eine Fronthaube beschränkt, sondern kann auch für beispielsweise eine heckseitige Haube angewandt werden.

Die Haube 2 ist mehrlagig aufgebaut und umfaßt neben der bereits erwähnten äußeren Decklage 3 zumindest eine innere Unterstützungslage 4, die mit der Decklage 3 bereichsweise verbunden ist, um damit eine Stabilität der Haube 2 insgesamt zu gewährleisten. Die Decklage 3 und die Unterstützungslage 4 bestehen häufig aus metallischem Werkstoff, insbesondere Stahl. Auch Aluminium oder andere Leichtmetalle sind möglich, ebenso Kunststoffe.

Erfindungsgemäß ist die Unterstützungslage 4 insgesamt flächig erstreckt, wobei aus einer Grundfläche 5 heraus als Verbindungselemente wirkende Ausprägungen 6 vorstehen. Diese Ausprägungen 6 hängen außerhalb der Grundfläche 5 nicht zusammen und sind im Ausführungsbeispiel jeweils durch Tiefziehprozesse aus der Unterstützungslage 4 herausgearbeitet. Dadurch treten sie aus der Ebene 5 in Einbaustellung nach oben hin in Richtung zur äußeren Decklage 2 hervor und können an Verbindungsflächen 7, die der äußeren Decklage 3 zugewandt sind, mit dieser verbunden werden.

Entgegen dem gezeigten Ausführungsbeispiel können die Verbindungsmittel 6 auch als separate Verbindungselemente, also nicht einstückig mit der Unterstützungslage 4, vorgesehen seien. Dann wären die Verbindungsmittel 6 beispielsweise als separate tiefgezogene Körper ausgebildet, die sowohl eine Verbindungsfläche zur Decklage 3 oder zur Unterstützungslage 4 als auch einen außenliegenden Flanschbereich zur Verbindung mit der jeweils gegenüberliegenden Lage 4 bzw. 3 aufweisen würden.

Die Verbindungsmittel 6 weisen eine mehrzählige Symmetrie um eine die Verbindungsfläche 7 senkrecht durchdringende Achse 8 auf, wodurch sich mehrere gleichartige Richtungen ergeben.

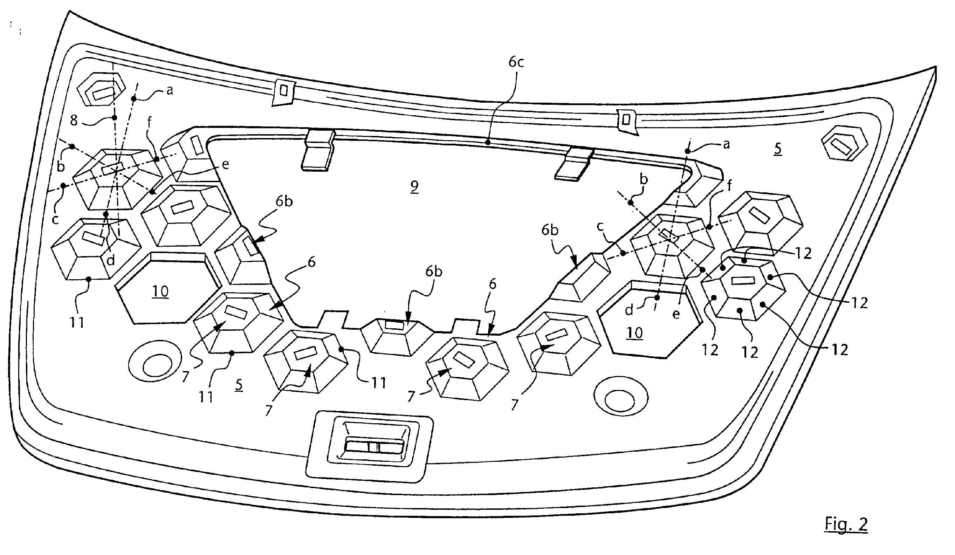

Im gezeichneten Ausführungsbeispiel (Figur 2) sind sechszählige Symmetrien vorgesehen, d. h., daß die dort anhand einer Ausprägung 6 eingezeichneten Richtungen a, b, c, d, e, f gleichwertig sind und die Widerstandskraft, die von einem Verbindungsmittel 6 gegen eine beispielsweise aus Richtung b einwirkende Kraft ebenso groß ist wie der Widerstand gegen eine aus beispielsweise aus Richtung f einwirkende Kraft.

Es versteht sich, daß auch andere Symmetrien in Frage kommen. Etwa ist auch eine drei- oder vierzählige oder auch eine höherzählige Symmetrie möglich.

Es müssen nicht alle als Verbindungsmittel wirkenden Ausprägungen 6 gleichartig ausgebildet sein. Im Ausführungsbeispiel sind etwa Verbindungsmittel 6 b gezeichnet, die durch eine Ausnehmung 9 angeschnitten sind. Zusätzlich ist eine größere Ausprägung 6 c eingezeichnet, die die Ausnehmung 9 an einem Randbereich einfaßt und lediglich in ihren Endbereichen die erwähnte Symmetrie jeweils zur Hälfte aufweist. Zur Gewichtsreduzierung können mehrere Ausnehmungen 9, 10 innerhalb der Unterstützungslage 4 vorgesehen sein. Die Verteilung der Verbindungsmittel 6 erfolgt dabei so, daß eine Anpassung an eine wahrscheinliche Aufprallzone eines Fahrradfahrers oder Fußgängers bei einem eventuellen Unfall berücksichtigt wird.

Die einzelnen Verbindungsmittel 6 sind im Ausführungsbeispiel aus der Fläche 5 der Unterstützungslage 4 heraus tiefgezogen und weisen jeweils insgesamt eine regelmäßige geometrische Umrißgestalt 11 auf. Im vorliegenden Ausführungsbeispiel ist die Umrißgestalt 11 sechseckig ausgebildet, ebenso sind die Verbindungsflächen 7 geometrisch regelmäßig und im Ausführungsbeispiel ebenfalls sechseckig ausgebildet, so daß sich insgesamt eine wabenähnliche Struktur der Ausprägungen 6 ergibt. Diese sind im Ausführungsbeispiel allseitig umlaufend, also entlang ihrer Umrißgestalt 11, mit der Fläche 5 verbunden. Auch ein Ausstanzen von einzelnen Bereichen von schräg abfallenden Wandungen 12, die die Verbindungsflächen 7 mit der Grundfläche 5 verbinden, ist möglich. Dann würden von den Schrägwandungen 12 jeweils nur einzelne stehenbleiben, somit wäre die Stabilität etwa als Widerstand gegen eine äußere Scherkraft hinsichtlich ihrer Symmetrie verändert. Eine solche spezielle Anpassung kommt insbesondere dann in Betracht, wenn die Verbindungsmittel 6 separat aufgebracht und sowohl mit der Decklage 3 als auch mit der Unterstützungslage 4 verbunden sind. Mit dem gezeigten Tiefziehverfahren zur Ausbildung der Ausprägungen 6 ergibt sich ohne weitere Maßnahmen die umlaufende Verbindung mit der Grundfläche 5.

Durch eine Belegung der Fläche 5 mit geometrisch gleichartigen Ausprägungen 6, beispielsweise wabenartigen Ausprägungen mit einer sechsseitigen Umrißgestalt 11, kann die Fläche 5 dicht mit Ausprägungen 6 belegt werden. Dabei können bei regelmäßig geometrischen Formen, etwa den gezeigten sechseckigen Strukturen, die Kantenbereiche jeweils aneinander parallel gegenüberliegen, die Wabenkörper können bis auf Kontakt an ihren Außenumrißkanten 11 aneinanderrücken oder nur einen kleinen Spalt zwischen sich belassen.

Die Übergangswinkel a zwischen der Verbindungsfläche 7 und den Schrägwandungen 12 liegt in der Größenordnung zwischen 25 und 35 Grad. Ebenso ist der Übergangswinkel b zwischen den Schrägwandungen 12 und der Grundfläche 5 in der gleichen Größenordnung, um dadurch etwa bei einem Crash mit anderen Fahrzeugen auftretende Scherkräfte in der Ebene der Haube 2 ohne Abriß der Verbindungsmittel 6 abfangen zu können. Damit ergibt sich eine hohe Stabilität der Haube 2 gegen Krafteinleitung aus jedweder Richtung, wobei durch die Symmetrie im gezeigten Ausführungsbeispiel 6 völlig gleichwertige Krafteinleitungsrichtungen für jedes Verbindungsmittel 6 existieren. Durch entsprechende Anordnung der Verbindungsmittel 6 wird zwischen diesen ein hinreichend großer Freiraum belassen, um auch in einem Bereich relativ dichter Anordnung noch eine Deformationsmöglichkeit der Decklage 3 erhalten zu können, wodurch diese beim Anprall etwa eines Fußgängers oder Radfahrers nachgiebig bleibt, selbst in den Bereichen, in denen eine sehr hohe Stabilität gegen seitliche Krafteinleitung gefordert wird.

Die Verbindungsflächen 7 können mit der Decklage 3 beispielsweise verschweißt oder insbesondere verklebt sein. Insgesamt ist damit ein sehr biegeund torsionssteifes Bauteil geschaffen, das gesetzliche Anforderungen zum Fußgängerschutz erfüllt und trotz seiner Ausbildung als Verbund mehrerer Lagen sortenrein bleiben kann und daher einfach zu recyceln ist.

Es versteht sich, daß die Erfindung bei verschiedenartigsten Fahrzeugen, neben Personenkraftwagen etwa auch bei Lastkraftwagen oder Spezialfahrzeugen, einsetzbar ist. Auch eine Dachfläche kann erfindungsgemäß ausgebildet sein.

## Patentansprüche

1. Kraftfahrzeug (1) mit einer Haube (2), insbesondere einer frontseitigen Haube, die zumindest eine äußere Decklage (3) sowie eine innenseitig über Verbindungsmittel (6) bereichsweise mit der Decklage (3) verbundene Unterstützungslage (4) umfaßt, wobei Verbindungsmittel (6) jeweils zur Verbindung mit der Unterstützungs- (4) und/oder der Decklage (3) eine diese kontaktierende Verbindungsfläche (7) aufweisen, **dadurch gekennzeichnet, daß** Verbindungsmittel (6) bezüglich einer diese senkrecht durchdringenden Achse (8) eine mehrzählige Symmetrie (a;b;c;d;e;f) aufweisen.

2. Kraftfahrzeug (1) nach Anspruch 1, **dadurch gekennzeichnet, daß** die Unterstützungslage (4) ein im wesentlichen flächiges Bauteil mit einer Mehrzahl von sich aus dessen Grundfläche (5) in Richtung der Decklage erstreckenden und als Verbindungsmittel (6) wirkenden Ausprägungen ausbildet.

3. Kraftfahrzeug nach einem der Ansprüche 1 oder 2, **dadurch gekennzeichnet, daß** die Verbindungsmittel (6) allseitig umlaufend (11) mit der Grundfläche (5) der Unterstützungslage verbunden sind.

4. Kraftfahrzeug nach einem der Ansprüche 1 bis 3, **dadurch gekennzeichnet, daß** die Verbindungsmittel (6) eine regelmäßig geometrische Umrißgestalt (11) haben.

5. Kraftfahrzeug nach Anspruch 4, **dadurch gekennzeichnet, daß** die Verbindungsmittel (6) eine sechseckige Umrißgestalt (11) haben.

6. Kraftfahrzeug nach einem der Ansprüche 1 bis 5, **dadurch gekennzeichnet, daß** die Verbindungsmittel (6) zentrale, im wesentlichen parallel zur Grundfläche der Unterstützungslage liegende Verbindungsflächen (7) mit der Decklage (3) aufweisen und die Verbindungsflächen (7) über schräg abfallende Wandungen (12) mit der Grundfläche (5) verbunden sind.

7. Kraftfahrzeug nach Anspruch 6, **dadurch gekennzeichnet, daß** die Verbindungsflächen (7) jeweils eine regelmäßig geometrische Umrißgestalt haben.

8. Kraftfahrzeug nach Anspruch 7, **dadurch gekennzeichnet, daß** die Umrißgestalt der Verbindungsfläche (7) die gleiche geometrische Grundform wie die Umrißgestalt (11) des gesamten Verbindungsmittels (6) ausbildet.

9. Kraftfahrzeug nach einem der Ansprüche 1 bis 8, **dadurch gekennzeichnet, daß** zumindest ein Verbindungsmittel (6) wabenförmige Gestalt hat.

10. Kraftfahrzeug nach einem der Ansprüche 1 bis 9, **dadurch gekennzeichnet, daß** die Verbindungsmittel (6) tiefgezogen sind.

11. Kraftfahrzeug nach einem der Ansprüche 1 bis 10, **dadurch gekennzeichnet, daß** der Übergangswinkel (a) zwischen den Verbindungsflächen (7) und den Schrägwandungen (12) sowie (b) zwischen den Schrägwandungen (12) und der Grundfläche (5) im Bereich von 25 bis 35 Grad liegt.

12. Kraftfahrzeug nach einem der Ansprüche 1 bis 11, **dadurch gekennzeichnet, daß** die Verbindungsmittel (6) mit der Decklage (3) verklebt sind.

13. Kraftfahrzeug nach einem der Ansprüche 1 bis 12, **dadurch gekennzeichnet, daß** die Verbindungsmittel (6) insbesondere in einer wahrscheinlichen Aufprallzone eines Fußgängers gleichmäßig verteilt sind.

14. Haube (2) für eine Fahrzeugkarosserie, wobei die Haube (2) zumindest eine äußere Decklage (3) sowie eine innenseitig über Verbindungsmittel (6) bereichsweise mit der Decklage (3) verbundene Unterstützungslage (4) umfaßt, **dadurch gekennzeichnet, daß** die Unterstützungslage (4) ein im wesentlichen flächiges Bauteil mit einer Mehrzahl von sich aus dessen Grundfläche (5) in Richtung der Decklage (3) erstreckenden und als Verbindungsmittel (6) wirkende Ausprägungen ausbildet, die bezüglich einer diese senkrecht durchdringenden Achse (8) eine mehrzählige Symmetrie (a;b;c;d;e;f) aufweisen.
